(19) Europäisches Patentamt
European Patent Office
Office européen des brevets

(11) Publication number: 0 193 280 B1

(12) **EUROPEAN PATENT SPECIFICATION**

(45) Date of publication of patent specification: 07.03.90

(51) Int. Cl.[5]: C 08 F 4/64, C 08 F 10/00

(21) Application number: 86300575.7

(22) Date of filing: 28.01.86

# (54) Catalyst component for olefin polymerization.

(30) Priority: 28.01.85 JP 12651/85

(43) Date of publication of application: 03.09.86 Bulletin 86/36

(45) Publication of the grant of the patent: 07.03.90 Bulletin 90/10

(84) Designated contracting states: BE DE FR GB IT NL SE

(56) References cited:
EP-A- 0 184 347
US-A- 4 301 029
US-A- 4 451 574
PATENTS ABSTRACTS OF JAPAN, vol. 7, no. 285 (C-201)[1430], 20th December 1983; & JP-A-58 162 607 (MITSUI TOATSU KAGAKU K.K.) 27-09-1983

The file contains technical information submitted after the application was filed and not included in this specification

(73) Proprietor: TOA NENRYO KOGYO KABUSHIKI KAISHA
1-1 Hitotsubashi, 1-Chome Chiyoda-Ku
Tokyo 100 (JP)

(72) Inventor: Yamamoto, Tadashi
1902-5, Ooaza Kamekubo Ooi-machi
Iruma-gun Saitama-ken (JP)
Inventor: Furuhashi, Hiroyuki
1902-5, Ooaza Kamekubo Ooi-machi
Iruma-gun Saitama-ken (JP)
Inventor: Imai, Masafumi
1902-5, Ooaza Kamekubo Ooi-machi
Iruma-gun Saitama-ken (JP)
Inventor: Ueno, Hiroshi
398-1, Ooaza Haneo Namagawa-machi
Hiki-gun Saitama-ken (JP)

(74) Representative: Northover, Robert Frank et al
ESSO Chemical Limited Esso Chemical Research Centre P.O. Box 1
Abingdon Oxfordshire, OX13 6BB (GB)

EP 0 193 280 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Field of industrial application

The present invention relates to a catalyst component for olefin polymerization.

### Prior art

It is known that if the titanium halide component of the Ziegler-Natta catalyst is supported on a magnesium halide, the catalytic activity per unit weight of titanium is improved. This technology, however, has a disadvantage in that the catalyst solids contain a large amount of halogen which, in turn, remains in the polymer to cause polymer degradation and equipment corrosion at the time of molding.

On the other hand, there have been proposed some technologies of using a halogen-free magnesium compound to reduce the halogen content in the catalyst solid. However, they are not so effective in reducing the amount of halogen contained in the catalyst solid.

For the same purposes, there have been proposed several catalyst components in which a transition metal is supported on a metal oxide such as silica and alumina. For example, there is disclosed in U.S. 3,993,588 a process for producing a catalyst component by supporting with heat treatment a magnesium halide or magnesium alkoxide on the surface of silica and further reacting it with a titanium compound. There is also disclosed in U.S. 4,335,016, U.S. 4,378,304, and U.S. 4,458,058 a catalyst component formed by reacting a porous support such as silica with an alkylmagnesium compound and then reacting the reaction product with a hydrocarbyloxysilane, or water, or a hydrocarbyl alcohol, and finally reacting the reaction product with a titanium halide compound. These catalyst components are suitable for (co)polymerization of ethylene, but are poor in activity and stereoregularity when used for (co)polymerization of an alpha-olefin such as propylene.

There are some known catalyst components for propylene polymerization. For example, Japanese Patent Laid-open No. 162607/1983 discloses a catalyst component formed by contacting a reaction product of a metal oxide and a magnesium dialkoxide with an electron donor compound and a titanium halide compound, and U.S. 4,263,168 and U.S. 4,329,252 disclose a catalyst component formed by contacting a reaction product of an inorganic oxide and a magnesium hydrocarbyl halide with a Lewis base and a titanium tetrachloride. These catalyst components are not necessarily satisfactory in activity and stereoregularity.

Moreover, U.S. 4,301,029 and U.S. 4,431,568 disclose a process for contacting a reaction product of a porous support (such as silica) and an alkylmagnesium compound with an electron donor compound and silicon halide compound prior to the contacting with a titanium compound. The catalyst component produced by this method is not necessarily satisfactory in performance for industrial use.

EP-A-148614 discloses a solid catalyst component obtained for example by contacting a ball milled mixture of magnesiumchloride with aluminiumtriethoxide $SiO_2$, tetrahydrofuran, $SiCl_4$ and $TiCl_4$. In example 7 a mixture of magnesiumchloride and magnesium diethoxide is used but there is no disclosure of all features of present invention.

EP 171200 discloses a solid catalyst obtained by contacting $SiO_2$, a magnesium dihydrocarbyl compound, a halogen containing alcohol, di-n-butylphthalate and $TiCl_4$. Use of a magnesiumdihydrocarbyloxide or halogen compounds other than halogen containing alcohols are not disclosed.

EP 173471 discloses a catalyst of $SiO_2$, an organometallic compound, an oxygen containing compound and a transition metal compound such as $TiCl_4$. It is optional to use a chlorosilane as a halogen containing compound or to use $Cl_2$, $Br_2$ or an interhalogen. The organometallic compound may be a dihydrocarbyl magnesium compound; there is no disclosure of a dihydrocarbyloxide. In the examples the dihydrocarbylmagnesium compound is contacted in the presence of an alcohol but the amounts of the alcohol are insufficient to provide the dihydrocarbyloxide.

### Problems to be solved by this invention

It is an object of the present invention to provide a catalyst component supported on a metal oxide which exhibits a high activity and high stereoregularity when used for homopolymerization of an olefin, especially an alpha-olefin such as propylene, and copolymerization of such an olefin with other olefins.

### Means to solve the problems

### Summary of invention

The present inventors carried out a series of researches which led to the finding that the object of the invention is achieved with a catalyst component which is formed by contacting a metal oxide, and hydrocarbyloxy group-containing magnesium compound, a halogen element or halogen-containing

compound, and electron donor compound, and a titanium compound with one another. The present invention was completed based on these findings.

Accordingly, the gist of the present invention resides in a supported titanium-containing catalyst component obtainable by contacting with one another

(A) a metal oxide selected from groups II to IV of the Periodic Table

(B) a magnesium dihydrocarbyloxide represented by the formula $Mg(OR^1)_p(OR^2)_q$, wherein $R^1$ and $R^2$ are the same or different alkyl, alkenyl, cycloalkyl, aryl, or aralkyl groups having from 1 to 20 carbon atoms, p or q are greater than O and $p + q = 2$

(C) a halogen element or a halide, other than magnesium halide, of metallic elements or of non-metallic elements excluding silicon halide compounds having a hydrogen-silicon bond

(D) an electron donor compound ; and

(E) a di, tri or tetravalent titanium compound ; contacting step (C) occurring prior to contacting step (E).

Preferably the magnesium dihydrocarbyloxide is prepared by contacting a magnesium dihydrocarbyl with an alcohol.

## Raw materials for preparation of catalyst component

(A) Metal oxide

The metal oxide used in this invention is an oxide of a metal selected from the group elements in Groups II to IV of the Periodic Table. It includes, for example, $B_2O_3$, MgO, $Al_2O_3$, $SiO_2$, CaO, $TiO_2$, ZnO, $ZrO_2$, $SnO_2$, BaO, and $ThO_2$. Preferrable among them are $B_2O_3$, MgO, $Al_2O_3$, $SiO_2$, $TiO_2$, and $ZrO_2$. Especially preferable is $SiO_2$. Additional examples of the metal oxides are such complex oxides containing the metal oxides as $SiO_2$-MgO, $SiO_2$-$Al_2O_3$, $SiO_2$-$TiO_2$, $SiO_2$-$V_2O_5$, $SiO_2$-$Cr_2O_3$, and $SiO_2$-$TiO_2$-MgO.

Fundamentally, the above-mentioned metal oxides and complex oxides should preferably be anhydrous. However, they may contain a very small amount of hydroxide which is usually present. In addition, they may contain impurities in such an amount that they do not considerably impair the properties of the metal oxides. The permissible impurities are oxides, carbonates, sulfates, and nitrates such as sodium oxide, potassium oxide, lithium oxide, sodium carbonate, potassium carbonate, calcium carbonate, magnesium carbonate, sodium sulfate, aluminum sulfate, barium sulfate, potassium nitrate, magnesium nitrate, and aluminum nitrate.

Usually the metal oxide is used in the form of powder. The particle size and shape of the powder should be properly adjusted because they affect the form of the resulting olefin polymer. In addition, the metal oxide should preferably be calcined, prior to use, at as high a temperature as possible to remove poisonous substances, and the calcined metal oxide should be isolated from the atmosphere during handling.

(B) Hydrocarbyloxy group-containing magnesium compound

The hydrocarbyloxy group-containing magnesium compound used in this invention is of the formula $Mg(OR^1)_p(OR^2)_q$ (where $R^1$ and $R^2$ are the same or different alkyl, alkenyl, cycloalkyl, aryl, or aralkyl group having 1 to 20 carbon atoms, preferably 1 to 15 carbon atoms, p or $q \geqslant 0$, and $p + q = 2$.

The following are examples of the compounds represented by the formula above.

(1) Magnesium dihydrocarbyloxides represented by $Mg(OR^1)_p(OR^2)$.

Examples of this compound are $Mg(OCH_3)_2$, $Mg(OC_2H_5)_2$,
$Mg(OCH_3)(OC_2H_5)$, $Mg(Oi\text{-}C_3H_7)_2$, $Mg(OC_3H_7)_2$, $Mg(OH_4H_9)_2$,
$Mg(O\text{-}iC_4H_9)_2$, $Mg(OC_4H_9)(Oi\text{-}C_4H_9)$, $Mg(OC_4H_9)(Osec\text{-}C_4H_9)$,
$Mg(OC_6H_{13})_2$, $Mg(OC_8H_{17})_2$, $Mg(OC_6H_{11})_2$, $Mg(OC_6H_5)_2$,
$Mg(OC_6H_4CH_3)_2$, $Mg(OCH_2C_6H_5)_2$, $Mg[O\text{-}2(C_2H_5) \cdot C_6H_{12}]_2$,
$Mg(Oi\text{-}C_7H_{15})_2$, $Mg(Oi\text{-}C_8H_{17})_2$, and $Mg[OC(CH_3)_2C_4H_9]_2$.

These compounds may be commercially obtained or they may be produced by known methods such as reacting metallic magnesium or a dihydrocarbyl magnesium such as diethyl magnesium, butyl ethyl magnesium, dibutyl magnesium, and diphenyl magnesium, with at least one alcohol such as ethanol, butanol, 2-ethylhexanol, and phenol, orthocarboxylate esters such as ethyl orthocarbonate, ethyl orthoformate, phenyl orthoformate, and ethyl orthobenzoate, alkoxyl group-containing silicon compounds such as tetraethoxysilane and phenyltriethoxysilane, alkoxyl group-containing phosphorus compounds such as triethyl phosphite and triphenyl phosphite, and alkoxyl group-containing boron compounds such as triethyl borate and tributyl borate.

The dihydrocarbyl magnesium used for the above-mentioned purpose may be a mixture or complex compound with other organometallic compounds such as triethyl aluminum, triethyl boron, diethyl beryllium, and diethyl zinc.

(C) Halogen element and halide

Examples of halogen elements include chlorine, bromine, and iodine.

Examples of halogen-containing compounds include halides of metallic or non-metallic elements such as $BCl_3$, $BBr_3$, $BI_3$, $ICl_3$, $AlCl_3$, $AlBr_3$, $AlI_3$, $GaCl_3$, $GaBr_3$, $InCl_3$, $TlCl_3$, $SiCl_4$, $GeCl_4$, $SnCl_4$, $SbCl_5$, $SbF_5$, $PCl_3$, and $PCl_5$ (excluding silicon halide compounds having a hydrogen-silicon bond) ; hydrogen

halides such as HCl, HBr, and HI ; oxyhalides of non-metallic elements such as $SO_2Cl_2$, $SOCl_2$, NOCl, and $POCl_3$ ; and halogenated hydrocarbons such as methyl chloride, methyl bromide, methyl iodide, methylene chloride, methylene bromide, methylene iodide, chloroform, bromoform, iodoform, carbon tetrachloride, carbon tetrabromide, carbon tetraiodide, ethyl chloride, ethyl bromide, ethyl iodide, 1,2-dichloroethane, 1,2-dibromoethane, 1,2-diiodoethane, methylchloroform, methylbromoform, methyliodoform, 1,1,2-trichloroethylene, 1,1,2-tribromoethylene, 1,1,2,2-tetrachloroethylene, pentachloroethane, hexachloroethane, hexabromoethane, n-propyl chloride, 1,2-dichloropropane, hexachloropropylene, octachloropropane, decabromobutane, chlorinated paraffin, chlorocyclopropane, tetrachlorocyclopentane, hexachloropentadiene, hexachlorocyclohexane, chlorobenzene, bromobenzene, o-dichlorobenzene, p-dichlorobenzene, hexachlorobenzene, hexabromobenzene, benzotrichloride, and p-chlorobenzotrichloride. These compounds may be used individually or in combination with one another.

(D) Electron donor compound

The electron donor compound includes carboxylic acids, carboxylic acid anhydrides, carboxylic acid esters, carboxylic acid halides, alcohols, ethers, ketones, amines, amides, nitriles, aldehydes, alcoholates, phosphamides, thioethers, thioesters, carbonic acid esters, and compounds of phosphorus, arsenic, or antimony attached to an organic group through a carbon or oxygen atom. Preferable among them are carboxylic acids, carboxylic acid anhydrides, carboxylic acid esters, carboxylic acid halides, alcohols, and ethers.

Examples of the carboxylic acids include aliphatic monocarboxylic acids such as formic acid, acetic acid, propionic acid, butyric acid, isobutyric acid, valeric acid, caproic acid, pivalic acid, acrylic acid, methacrylic acid, and crotonic acid ; aliphatic dicarboxylic acids such as malonic acid, succinic acid, glutaric acid, adipic acid, sebasic acid, maleic acid, and fumaric acid ; aliphatic hydroxycarboxylic acids such as tartaric acid ; alicyclic carboxylic acids such as cyclohexane monocarboxylic acid, cyclohexene monocarboxylic acid, cis-1,2-cyclohexane dicarboxylic acid, and cis-4-methylcyclohexene-1,2-dicarboxylic acid ; aromatic monocarboxylic acids such as benzoic acid, toluic acid, anisic acid, p-tertiary-butylbenzoic acid, naphthoic acid, and cinnamic acid ; and aromatic dicarboxylic acids such as phthalic acid, isophthalic acid, terephthalic acid, and naphthalic acid.

The carboxylic acid anhydrides are anhydrides of the above-mentioned carboxylic acids in the form of anhydrides.

The carboxylic acid esters are monoesters and diesters of the above-mentioned carboxylic acids. Their examples include butyl formate, ethyl acetate, butyl butyrate, isobutyl isobutyrate, propyl pivalate, isobutyl pivalate, ethyl acrylate, methyl methacrylate, ethyl methacrylate, isobutyl methacrylate, diethyl malonate, diisobutyl malonate, diethyl succinate, dibutyl succinate, diisobutyl succinate, diethyl glutarate, dibutyl glutarate, diisobutyl glutarate, diisobutyl adipate, dibutyl sebacate, diethyl maleate, dibutyl maleate, diisobutyl maleate, monomethyl fumarate, diethyl fumarate, diisobutyl fumarate, diethyl tartrate, dibutyl tartrate, diisobutyl tartrate, ethyl cyclohexanecarbonate, methyl benzoate, ethyl benzoate, methyl p-toluylate, ethyl p-tertiary-butylbenzoate, ethyl p-anisate, ethyl alpha-naphthoate, isobutyl alpha-naphthoate, ethyl cinnamate, monomethyl phthalate, dibutyl phthalate, diisobutyl phthalate, dihexyl phthalate, dioctyl phthalate, di-2-ethylhexyl phthalate, diaryl phthalate, diphenyl phthalate, diethyl isophthalate, diisobutyl isophthalate, diethyl terephthalate, dibutyl terephthalate, diethyl naphthalate, and dibutyl naphthalate.

The carboxylic acid halides are halides of the above-mentioned carboxylic acids. Their examples include acetic acid chloride, acetic acid bromide, acetic acid iodide, propionic acid chloride, butyric acid chloride, butyric acid bromide, butyric acid iodide, pivalic acid chloride, pivalic acid bromide, acrylic acid chloride, acrylic acid bromide, acrylic acid iodide, methacrylic acid chloride, methacrylic acid bromide, methacrylic acid iodide, crotonic acid chloride, malonic acid chloride, malonic acid bromide, succinic acid chloride, succinic acid bromide, glutario acid chloride, glutatric acid bromide, adipic acid chloride, adipic acid bromide, sebasic acid chloride, sebasic acid bromide, maleic acid chloride, maleic acid bromide, fumaric acid chloride, fumaric acid bromide, tartaric acid chloride, tartaric acid bromide, cyclohexane carboxylic acid chloride, cyclohexane carboxylic acid bromide, 1-cyclohexene carboxylic acid chloride, cis-4-methylcyclohexene carboxylic acid chloride, cis-4-methylcyclohexene carboxylic acid bromide, benzoyl chloride, benzoyl bromide, p-toluic acid chloride, p-toluic acid bromide, p-anisic acid chloride, p-anisic acid bromide, alpha-naphthoic acid chloride, cinnamic acid chloride, cinnamic acid bromide, phthalic acid dichloride, phthalic acid dibromide, isophthalic acid dichloride, isophthalic acid dibromide, terephthalic acid dichloride, and naphthalic acid dichloride. Additional useful compounds include dicarboxylic acid monoalkylhalides such as adipic acid monomethylchloride, maleic acid monoethylchloride, and maleic acid monomethylchloride.

The alcohols are those compounds represented by the formula ROH, where R is a $C_1$ to $C_{12}$ alkyl, alkenyl, cycloalkyl, aryl, or aralkyl group. Examples of the alcohols include methanol, ethanol, propanol, isopropanol, butanol, isobutanol, pentanol, hexanol, octanol, 2-ethylhexanol, cyclohexanol, benzyl alcohol, allyl alcohol, phenol, cresol, xylenol, ethylphenol, isopropylphenol, p-tertiarybutylphenol, and n-octylphenol.

The ethers are those compounds represented by the formula ROR′, where R and R′ are $C_1$ to $C_{12}$ alkyl, alkenyl, cycloalkyl, aryl, or aralkyl groups. R and R′ may be the same or different. Examples of the

ethers include diethyl ether, diisopropyl ether, dibutyl ether, diisobutyl ether, diisoamyl ether, di-2-ethylhexyl ether, diallyl ether, ethylallyl ether, butylallyl ether, diphenyl ether, anisole, and ethylphenyl ether.

(E) Titanium compound

The titanium compound used in this invention is a compound of divalent, trivalent, or tetravalent titanium. Examples of the compound include titanium tetrachloride, titanium tetrabromide, trichloroethoxytitanium, trichlorobutoxytitanium, dichlorodiethyoxytitanium, dichlorodibutoxytitanium, dichlorodiphenoxytitanium, chlorotriethoxytitanium, chlorotributoxytitanium, tetrabutoxytitanium, and titanium trichloride. Preferable among them are tetravalent titanium halides such as titanium tetrachloride, trichloroethoxytitanium, dichlorodibutoxytitanium, and dichlorodiphenoxytitanium. Particularly preferable is titanium tetrachloride.

Preparation of catalyst component

The catalyst component of this invention is obtained by contacting a metal oxide (component A), an alkoxyl group-containing magnesium compound (component B), a halogen atom or halogen-containing compound (component C), an electron donor compound (component D), and a titanium compound (component E). The contacting of the five components may be accomplished, for example, in the following manners.

(1) Component A and component B are contacted with each other and the resulting contact product is contacted with component C and the resulting contact product is contacted further with component D and component E simultaneously or individually.

(2) Component A, component B, and component D are contacted with one another simultaneously or individually, and the resulting contact product is contacted with component C, and the resulting contact product is contacted further with component E.

(3) Component A, component B, and component C are contacted with one another simultaneously, and the resulting contact product is contacted with component D and component E simultaneously or individually.

(4) Component A, component B, component C, and component D are contacted with one another simultaneously, and the resulting contact product is contacted with component E.

Contacting methods (1) and (2) are preferable. They are explained in the following.

Method (1)

(i) Contacting of component A with component B

The contacting of component A with component B is accomplished by mixing and stirring or mechanically copulverizing the two components in the presence or absence of an inert medium. Examples of the inert medium include hydrocarbons such as pentane, hexane, heptane, octane, decane, cyclohexane, benzene, toluene, and xylene; and halogenated hydrocarbons such as 1,2-dichloroethane, 1,2-dichloropropane, carbon tetrachloride, butyl chloride, isoamyl chloride, bromobenzene, and chlorotoluene.

It is possible to perform the contacting of component A with component B by synthesizing component B in the presence of component A in the above-mentioned manner.

Usually the contacting of component A with component B is performed at —20 °C to 150 °C for 0.1 to 100 hours. Where the contacting is accompanied by abrupt heat generation, the components may be mixed little by little at a low temperature in the initial stage, and after the mixing of all the components is complete, the temperature of the mixture may be increased and contacting may be continued. The molar ratio (B/A) of component A and component B in the contacting step is 0.01 to 1.

The contacting by mechanical copulverization may be accomplished by using a grinder, such as rotary ball mill, vibratory ball mill, and impact mill, which is commonly used to obtain grinds. The copulverization may be accomplished, if necessary, under reduced pressure or in an inert gas atmosphere, in the substantial absence of moisture and oxygen.

(ii) Contacting with component C

The contact product of component A and component B (referred to as contact product (a) hereinafter) is subsequently contacted with component C by mixing and stirring or mechanically copulverizing the two components in the presence or absence of the same inert medium as mentioned above. Before contacting with component C, the contact product (a) may be washed with a proper cleaning agent such as the above-mentioned inert medium.

In the case of mechanical copulverization, the contact temperature is 0 to 200 °C and the contact time is 0.5 to 100 hours. In the case of mere stirring, the contact temperature is 0 to 200 °C and the contact time is 0.5 to 100 hours. Component C is not limited to one kind; but two or more kinds of component C may be used.

The amount of component C is 0.5 to 10 gram-mol, preferably 1 to 5 gram-mol, per gram-atom of magnesium in contact product (a).

(iii) Contacting with component D and component E

The contact product of contact product (a) and component C (referred to as contact product (b) hereinafter) is subsequently contacted with component D and component E. Before contacting with component D and component E, the contact product (b) may be washed with a proper cleaning agent such as the above-mentioned inert medium.

The contacting of the contact product (b) with component D and component E may be accomplished by (1) contacting it with component D and then contacting the resulting contact product with component E, (2) contacting it with component E and then contacting the resulting contact product with component D, or (3) contacting it with component D and component E simultaneously.

The above-mentioned contacting may be accomplished by mixing and stirring or mechanically copulverizing the contact products and components in the presence or absence of an inert medium. Mixing and stirring in the presence or absence of an inert medium is preferable. Examples of the inert medium are as mentioned above.

The contacting of contact product (b) with component D and component E is usually accomplished at 0 to 200 °C for 0.1 to 100 hours in the case of mechanical copulverization, and at 0 to 200 °C for 0.5 to 20 hours in the case of mixing and stirring.

The amount of component D is 0.005 to 10 gram-mol, preferably 0.01 to 1 gram-mol, per gram-atom of magnesium in contact product (b). The amount of component E is 0.1 gram-mol or above, preferably 1 to 50 gram-mol, per gram-atom of magnesium in contact product (b).

The contacting of contact product (b) with component E may be performed twice or more, if necessary, in the same manner as mentioned above. In this case, the resulting contact product obtained first may be washed with an inert medium, and then the washed contact product is contacted further with additional fresh component E (and additional medium).

Where the contacting with component E is performed twice or more, the contact product may be contacted with an inert hydrocarbon, a halogen element, or halogen-containing compound, in the interval between the preceding contact and the succeeding contact.

The inert hydrocarbon that can be used in the contacting step is an aliphatic, alicyclic, or aromatic hydrocarbon. Their examples are n-hexane, methylhexane, dimethylhexane, ethylhexane, ethylmethylpentane, n-heptane, methylheptane, trimethylpentane, dimethylheptane, ethylheptane, trimethylhexane, trimethylheptane, n-octane, methyloctane, dimethyloctane, n-undecane, n-dodecane, n-tridecane, n-tetradecane, n-pentadecane, n-hexadecane, n-octadecane, n-nonadecane, n-eicosane, cyclopentane, cyclohexane, methylcyclopentane, cycloheptane, dimethylcyclopentane, methylcyclohexane, ethylcyclopentane, dimethylcyclohexane, ethylcyclohexane, cyclooctane, indan, n-butylcyclohexane, isobutylcyclohexane, adamantane, benzene, toluene, xylene, ethylbenzene, tetramethylbenzene, n-butylbenzene, isobutylbenzene, propyltoluene, decaline, and tetralin.

The halogen element and halogen-containing compound that can be used in the contacting step is the same as component C used in this invention.

Where the contacting with component E is performed twice or more, the intermediate contact product is contacted, if necessary, with an inert hydrocarbon, a halogen element, or halogen-containing compound (called component F hereinafter) in the interval between the preceding contact and the succeeding contact. This contact is performed at 0 to 220 °C for 5 minutes to 20 hours, preferably at 20 to 150 °C for 10 minutes to 5 hours. Where component F is a liquid substance, it is used in such an amount that contact product (b) is 1 to 1000 g per liter of component F. Where component F is a solid substance, it is preferable to use it in the form of solution. It is used in such an amount that the amount of contact product (b) is 0.01 to 100 g per g of component F.

After the contacting of contact product (b) with component E, the resulting contact product may be contacted further with component F in the same manner as mentioned above.

Method (2)

(i) Contacting of component A, component B, and component D with one another

The contacting of component A, component B, and component D with one another is accomplished by mixing and stirring or mechanically copulverizing the three components in the presence or absence of an inert medium. The inert medium is the same as that used in paragraph (i) in Method (1) mentioned above.

The contacting of component A, component B, and component D with one another is accomplished in the order mentioned below. (1) Component A and component B are contacted with each other and the resulting contact product is contacted with component D. (2) Component A and component D are contacted with each other, and the resulting contact product is contacted with component B. (3) Component A, component B, and component D are contacted with one another simultaneously. Among these three methods, the third method (3) is preferable.

The contacting of component A, component B, and component D with one another may be accomplished by synthesizing component B in the above-mentioned method.

Usually the contacting of component A, component B, and component D with one another is performed at — 20 °C to 150 °C for 0.1 to 20 hours. Where the contacting is accompanied by abrupt heat generation, the components may be mixed little by little at a low temperature in the initial stage, and after

the mixing of all the components is complete, the temperature of the mixture may be increased and contacting may be continued.

The molar ratio of component A, component B, and component D is B/A = 0.01 to 1 and D/B = 0.01 to 1.

(ii) Contacting with component C

The contact product of component A, component B, and component D (referred to as contact product (c) hereinafter) is subsequently contacted with component C in the same manner as used in contacting contact product (a) with component C as mentioned in paragraph (ii) in Method (1) above.

(iii) Contacting with component E

The contact product (referred to as contact product (d) hereinafter) of contact product (c) and component C is subsequently contacted with component E to be made into the catalyst component of this invention.

The contacting of contact product (d) with component E is accomplished in the same manner as used in contacting contact product (b) with component E as mentioned in paragraph (iii) in Method (1) above.

As in the above-mentioned Method (1) - (iii), contacting with component E may be performed twice or more. In such a case, the intermediate contact product is contacted, if necessary, with component F in the interval between the preceding contact and the succeeding contact, as mentioned in Method (1) - (iii).

Furthermore, contact product (d) may be contacted with component D in addition to component E. The contacting with component D may be performed in the same manner as in Method (1) - (iii) above, (1) before contacting with component E, (2) after contacting with component E, or (3) simultaneously with contacting with component E.

In addition, the contact product of contact product (d) with component E (also the contact product of contact product (d) with component F or component D) may be contacted further with component F in the same manner as in Method (1) - (iii) mentioned above.

The catalyst component of this invention can be produced as mentioned above. It is washed, if necessary, with an inert hydrocarbon such as hexane, heptane, octane, cyclohexane, benzene, toluene, and xylene, and, if necessary, dried.

The catalyst component of this invention is a powder having a specific surface area of 10 to 1000 $m^2/g$ as measured by the BET method at the adsorption temperature of liquid nitrogen, a pore volume of 0.05 to 5 $cm^3/g$, and a narrow particle size distribution with uniform particle size. It is composed of 3 to 90 wt% of metal oxide, 1 to 25 wt% of magnesium, 0.5 to 10 wt% of titanium, and 4 to 60 wt% of chlorine.

## Catalyst for olefin polymerization

The catalyst component of this invention is combined with an organic compound of a metal in Groups I to III of the Periodic Table, to be made into a catalyst for homopolymerization of an olefin or for copolymerization of an olefin with another olefin.

## Organic compound of metal in Groups I to III

An organic compound of lithium, magnesium, calcium, zinc, or aluminum can be used as the organometallic compound. Among these organometallic compounds, an organoaluminum compound is preferable. The organoaluminum compound that can be used is represented by the formula $R_nAlX_{3-n}$ (where R is an alkyl group or aryl group ; X is a halogen atom, alkoxyl group, or hydrogen atom ; and n is a number in the range of 1 n 3). Preferred ones are $C_1$ to $C_{18}$, preferably $C_2$ to $C_6$ alkyl aluminum compounds and mixtures thereof and complex compounds thereof such as trialkyl aluminum, dialkyl aluminum monohalide, monoalkyl aluminum dihalide, alkyl aluminum sesquihalide, dialkyl aluminum monoalkoxide, and dialkyl aluminum monohydride. Their examples include trialkyl aluminum such as trimethyl aluminum, triethyl aluminum, tripropyl aluminum, triisobutyl aluminum, and trihexyl aluminum ; dialkyl aluminum monohalide such as dimethyl aluminum chloride, diethyl aluminum chloride, diethyl aluminum bromide, diethyl aluminum iodide, and diisobutyl aluminum chloride ; monoalkyl aluminum dihalide such as methyl aluminum dichloride, ethyl aluminum dichloride, methyl aluminum dibromide, ethyl aluminum dibromide, ethyl aluminum diiodide, and isobutyl aluminum dichloride ; alkyl aluminum sesquihalide such as ethyl aluminum sesquichloride ; dialkyl aluminum monoalkoxide such as dimethyl aluminum methoxide, diethyl aluminum ethoxide, diethyl aluminum phenoxide, dipropyl aluminum ethoxide, diisobutyl aluminum ethoxide, and diisobutyl aluminum phenoxide ; and dialkyl aluminum hydride such as dimethyl aluminum hydride, diethyl aluminum hydride, dipropyl aluminum hydride, and diisobutyl aluminum hydride.

Preferable among these compounds is trialkyl aluminum, particularly triethyl aluminum and triisobutyl aluminum. The trialkyl aluminum may be used in combination with other organoaluminum compounds such as commercially available diethyl aluminum chloride, ethyl aluminum dichloride, ethyl aluminum sesquichloride, diethyl aluminum ethoxide, and diethyl aluminum hydride, or a mixture thereof or a complex compound thereof.

Another organoaluminum compound that can be used is one in which two or more aluminum atoms are connected through an oxygen atom or nitrogen atom. Examples of such compounds are $(C_2H_5)_2AlOAl(C_2H_5)_2$,

$(C_4H_9)_2AlOAl(C_4H_9)_2$, and $(C_2H_5)_2AlNAl(C_2H_5)_2$.
$|$
$C_2H_5$

Other organometallic compounds than organoaluminum compounds are diethyl magnesium, ethyl magnesium chloride, diethyl zinc, $LiAl(C_2H_5)_4$, and $LiAl(C_7H_{15})_4$.

The organometallic compound may be used alone or in combination with an electron donor compound.

The electron donor compound may be any compound that is used as component D in the preparation of the above-mentioned catalyst component. The electron donor compound may be an organosilicon compound or a compound that contains a hetero atom such as nitrogen, sulfur, oxygen, and phosphorus.

Examples of the organosilicon compounds include tetramethoxysilane, tetraethoxysilane, tetrabutoxysilane, tetraisobutoxysilane, tetraphenoxysilane, tetra(p-methylphenoxy)silane, tetrabenzyloxysilane, methyltrimethoxysilane, methyltriethoxysilane, methyltributoxysilane, methyltriphenoxysilane, ethyltriethoxysilane, ethyltriisobutoxysilane, ethyltriphenoxysilane, butyltrimethoxysilane, butyltriethoxysilane, butyltributoxysilane, butyltriphenoxysilane, isobutyltriisobutoxysilane, vinyltriethoxysilane, aryltrimethoxysilane, phenyltrimethoxysilane, phenyltriethoxysilane, benzyltriphenoxysilane, methyltriaryloxysilane, dimethyldimethoxysilane, dimethyldiethoxysilane, dimethyldiisopropoxysilane, dimethyldibutoxysilane, dimethyldihexyloxysilane, dimethyldiphenoxysilane, diethyldiethoxysilane, diethyldiisobutoxysilane, diethyldiphenoxysilane, dibutyldiisopropoxysilane, dibutyldibutoxysilane, dibutyldiphenoxysilane, diisobutyldiethoxysilane, diisobutyldiisobutoxysilane, diphenyldimethoxysilane, diphenyldiethoxysilane, diphenyldibutoxysilane, dibenzyldiethoxysilane, divinyldiphenoxysilane, diaryldipropoxysilane, diphenyldiaryloxysilane, methylphenyldimethoxysilane, chlorophenyldiethoxysilane.

Examples of the electron donor compound containing a hetero atom are given below. Those which contain a nitrogen atom include 2,2,6,6-tetramethylpiperidine, 2,6-dimethylpiperidine, 2,6-diethylpiperidine, 2,6-diisopropylpiperidine, 2,6-diisobutyl-4-methylpiperidine, 1,2,2,6,6-pentamethylpiperidine, 2,2,5,5-tetramethylpyrrolidine, 2,5-dimethylpyrrolidine, 2,5-diethylpyrrolidine, 2,5-diisopropylpyrrolidine, 1,2,2,5,5-pentamethylpyrrolidine, 2,2,5-trimethylpyrrolidine, 2-methylpyridine, 3-methylpyridine, 4-methylpyridine, 2,6-diisopropylpyridine, 2,6-diisobutylpyridine, 1,2,4-trimethylpiperidine, 2,5-dimethylpiperidine, methyl nicotinate, ethyl nicotinate, nicotinamide, benzoic amide, 2-methylpyrrole, 2,5-dimethylpyrrole, imidazole, toluylic amide, benzonitrile, acetonitrile, aniline, paratoluidine, orthotoluidine, metatoluidine, triethylamine, diethylamine, dibutylamine, tetramethylenediamine, and tributylamine. Those which contain a sulfur atom include thiophenol, thiophene, ethyl 2-thiophenecarboxylate, ethyl 3-thiophenecarboxylate, 2-methylthiophene, methylmercaptan, ethylmercaptan, isopropylmercaptan, butyl mercaptan, diethyl thioether, diphenyl thioether, methyl benzenesulfonate, methyl sulfite, and ethyl sulfite. Those which contain an oxygen atom include tetrahydrofuran, 2-methyltetrahydrofuran, 3-methyltetrahydrofuran, 2-ethyltetrahydrofuran, 2,2,5,5-tetraethyltetrahydrofuran, 2,2,5,5-tetramethyltetrahydrofuran, 2,2,6,6-tetraethyltetrahydropyran, 2,2,6,6-tetrahydropyran, dioxane, dimethyl ether, diethyl ether, dibutyl ether, diisoamyl ether, diphenyl ether, anisole, acetophenone, acetone, methyl ethyl ketone, acetyl acetone, o-tolyl-t-butyl ketone, methyl-2,6-di-t-butyl phenyl ketone, ethyl 2-furoate, isoamyl 2-furoate, methyl 2-furoate, and propyl 2-furoate. Those which contain a phosphorus atom include triphenyl phosphine, tributyl phosphine, triphenyl phosphite, tribenzyl phosphite, diethyl phosphate, and diphenyl phosphate.

Two kinds or more of the electron donor compounds may be used. They may be used when the catalyst component is combined with an organometallic compound or used after the contacting with an organometallic compound.

Usually the organometallic compound is used in an amount of 1 to 2000 gram-mol, particularly 20 to 500 gram-mol, per gram-atom of titanium in the catalyst component of this invention.

The amount of the organometallic compound is 0.1 to 40 gram-atom, preferably 1 to 25 gram-atom in terms of aluminum per mol of the electron donor compound.

## Polymerization of olefins

The catalyst composed of the catalyst component obtained as mentioned above and an organometallic compound (and an electron donor compound) is useful for homopolymerization of monoolefin having 2 to 10 carbon atoms and copolymerization of a monoolefin having 2 to 10 carbon atoms with another monoolefin or a diolefin having 3 to 10 carbon atoms. It is an outstanding catalyst for homopolymerization of alpha-olefins, particularly $C_3$ to $C_6$ alpha-olefins, such as propylene, 1-butene, 4-methyl-1-pentene, and 1-hexene ; and for random and block copolymerization of the above-mentioned alpha-olefins with one another and/or with ethylene.

The polymerization may be performed in either gas phase or liquid phase. The liquid phase polymerization may be accomplished in an inert hydrocarbon such as n-butane, isobutane, n-pentane, isopentane, hexane, heptane, octane, cyclohexane, benzene, toluene, and xylene ; or in the liquid

monomer. The polymerization temperature is usually —80 °C to +150 °C, preferably 40 to 120 °C. The polymerization pressure is 1 to 60 atm. The molecular weight modification of the resulting polymer is accomplished by the aid of hydrogen or any known molecular weight modifier present in the system. In the case of copolymerization, the quantity of an olefin to be copolymerized is usually less than 30 wt%, particularly 0.3 to 15 wt%, based on the principal olefin. The polymerization with the catalyst system of this invention may be performed continuously or batchwise under the commonly used conditions. The copolymerization may be accomplished in one step or in two or more steps.

## Effect of the invention

The catalyst component of this invention is effective for the production of polyolefins, particularly isotactic polypropylene, ethylene-propylene random copolymers, and ethylene-propylene block copolymers.

The polymerization catalyst containing the catalyst component of this invention has a high polymerization activity and high stereoregularity and keeps the high activity for a long period at the time of polymerization. In addition, it provides polyolefin powder having a high bulk density and good flowability.

## Examples

The invention is now described in more detail with reference to the following examples and application examples, which should not be construed to limit the scope of the invention. Percent (%) in the examples and application examples means wt%, unless otherwise indicated.

The heptane insolubles (abbreviated as HI hereinafter) which indicate the ratio of the crystalline phase in the polymer are the amount of the polymer which remains undissolved when the polymer is extracted with boiling n-heptane for 6 hours in a Soxhlet apparatus of improved type.

Melt flow rate (MFR) was measured according to ASTM D1238, and bulk density was measured according to ASTM D1895-69, method A.

## Example 1

### Contacting of silicon oxide with n-butylethyl magnesium

In a 200-ml flask equipped with a dropping funnel and stirrer, with the atmosphere therein replaced with nitrogen, were placed 5 g of silicon oxide (abbreviated as $SiO_2$ hereinafter) and 20 ml of n-heptane. (The silicon oxide is G-952, a product of DAVISON, having a specific surface area of 302 $m^2/g$, a pore volume of 1.54 $m^3/g$, and an average pore diameter of 204 Å ($204 \times 10^{-8}$cm). Prior to use, it was calcined in a nitrogen stream at 200 °C for 5 hours, and then at 700 °C for 5 hours.) Further, there was added at room temperature 20 ml of 20 % solution of n-butylethylmagnesium (abbreviated as BEM hereinafter) in n-heptane (MAGALA (registered Trade Mark) BEM, a product of Texas Alkyls, containing 26.8 mmol of BEM), followed by stirring at 90 °C for 2 hours. The supernatant liquid was removed by decantation and the resulting solid substance was washed with 50 ml of n-heptane at room temperature. The supernatant liquid was removed by decantation. The washing with n-heptane was repeated four times. A portion of the washed solid substance was dried and analyzed. It was found to contain 5.1 % of magnesium.

### Contacting with ethanol

The solid substance obtained in the above-mentioned step was suspended in 20 ml of n-heptane. To the resulting suspension was added a solution containing 2.9 g (64 mmol) of ethanol in 10 ml of n-heptane from a dropping funnel at 0 °C over 15 minutes. The mixture was stirred at 0 °C for 1 hour and then heated to 80 °C over 1 hour, and stirring was continued at 80 °C for 1 hour. After the reaction was complete, the resulting solid substance was washed with four 50 ml portions of n-heptane at room temperature. The solid substance (designated as solid component I) was found to contain 76.8 % of $SiO_2$, 5.0 % of magnesium, and 15.8 % of ethoxy group. The solid substance was also found to have a specific surface area of 248 $m^2/g$ and a pore volume of 0.74 $cm^3/g$.

### Contacting with silicon tetrachloride

To the solid component I obtained as mentioned above was added 40 ml of n-heptane, and then a solution of 12 g (0.07 mol) of silicon tetrachloride in 20 ml of n-butane was added dropwise from the dropping funnel over 45 minutes, followed by stirring at 70 °C for 2 hours. After the completion of reaction, the resulting solid substance was washed with two 50 ml portions of n-heptane and three 50 ml portions of toluene at room temperature. The thus obtained solid substance (solid component II) was found to contain 4.3 % of magnesium, 81.2 % of $SiO_2$, and 13.4 % of chlorine. It was also found to have a specific surface area of 237 $m^2/g$ and a pore volume of 0.73 $cm^3/g$.

Contacting with di-n-butyl phthalate and titanium tetrachloride

To the solid component II obtained in the above-mentioned step were added 20 ml of toluene and 0.6 g of di-n-butyl phthalate, followed by reaction at 50 °C for 2 hours. Then 30 ml of titanium tetrachloride was added, followed by reaction at 90 °C for 2 hours. The resulting solid substance was washed with eight 50 ml portions of n-hexane at room temperature and dried under reduced pressure at room temperature for 1 hour. There was obtained 7.2 g of catalyst component having a specific surface area of 273 $m^2/g$ and a pore volume of 0.85 $cm^3/g$. The catalyst component was found to contain 73.5 % of $SiO_2$, 4.0 % of magnesium, 15.1 % of chlorine, 1.9 % of titanium, and 2.2 % of di-n-butyl phthalate.

Example 2

After the contacting with titanium tetrachloride in Example 1, the supernatant liquid was removed by decantation, and the solid substance was washed with 50 ml of toluene at 90 °C for 15 minutes. Washing with toluene was repeated. 20 ml of toluene and 30 ml of titanium tetrachloride were added, followed by reaction at 90 °C for 2 hours. The resulting substance was washed with n-hexane and dried in the same manner as in Example 1. Thus there was obtained 7.4 g of catalyst component having a specific surface area of 289 $m^2/g$ and a pore volume of 0.83 $cm^3/g$. The catalyst component was found to contain 75.0 % of $SiO_2$, 3.9 % of magnesium, 14.5 % of chlorine, and 1.9 % of titanium.

Example 3

A catalyst component containing 1.6 % of titanium was prepared in the same manner as in Example 2, except that the contact temperature for titanium tetrachloride was changed from 90 °C to 120 °C.

Example 4

A catalyst component containing 1.6 % of titanium was prepared in the same manner as in Example 3, except that at the time of contacting with di-n-butyl phthalate and titanium tetrachloride, di-n-butyl phthalate and titanium tetrachloride were added simultaneously.

Example 5

A catalyst component containing 1.5 % of titanium was prepared in the same manner as in Example 3, except that at the time of contacting with di-n-butyl phthalate and titanium tetrachloride de, 30 ml of titanium tetrachloride was added, followed by rapid heating to 120 °C with stirring, and then 0.6 g of di-n-butyl phthalate was added, followed by reaction at 120 °C for 2 hours.

Example 6

To solid component I obtained in Example 1 was added 50 ml of titanium tetrachloride, and the reactants were rapidly heated to 120 °C. Then, 0.6 g of di-n-butyl phthalate was added, followed by reaction at 120 °C for 2 hours. After the completion of reaction, the supernatant liquid was removed and 50 ml of titanium tetrachloride was added, followed by reaction at 120 °C for 2 hours. Washing and drying were performed in the same manner as in Example 1. Thus there was obtained a catalyst component containing 1.7 % of titanium.

Example 7

A catalyst component containing 1.5 % of titanium was prepared in the same manner as in Example 3, except that BEM was replaced by 13.4 ml of tetrahydrofuran solution (2 mol/liter) of ethylmagnesium chloride.

Example 8

In a 300 ml flask equipped with a stirrer were placed 5 g of $SiO_2$ (the one used in Example 1), 20 ml of n-heptane, and 0.6 g of di-n-butyl phthalate. The reactants were cooled to 0 °C. Then 20 ml of BEM solution (the one used in Example 1) was added at 0 °C over 15 minutes, followed by stirring at 0 °C for 1 hour. At the same temperature, a solution containing 2.9 g of ethanol in 10 ml of n-heptane was added dropwise over 15 minutes, followed by stirring at 0 °C for 1 hour. The reactants were heated to 80 °C over 1 hour, followed by stirring at 80 °C for 1 hour. After the completion of reaction, the resulting solid substance was washed with four 50 ml portions of n-heptane at room temperature.

The thus obtained slurry was contacted with silicon tetrachloride and titanium tetrachloride in the

same manner as in Example 3, except that the contacting with di-n-butyl phthalate was not performed. Thus there was obtained a catalyst component containing 1.6 % of titanium.

Example 9

Preparation of magnesium dialkoxide

In a 300 ml flask, with the atmosphere therein replaced with nitrogen, was placed 25 ml (32 mmol) of BEM solution (as used in Example 1). Then a mixture of 10 ml (64 mmol) of 2-ethylhexanol and 20 ml of n-heptane was added dropwise over 15 minutes at room temperature. With the flask immersed in an oil bath at 120 °C, stirring was continued at the reflux temperature of n-heptane for 1 hour. Upon the completion of reaction, there was obtained a colorless transparent viscous solution of magnesium di-2-ethylhexyloxide (solution A).

Contacting with $SiO_2$

To solution A obtained in the previous step was added 5 g of $SiO_2$ (the one used in Example 1), followed by stirring at 70 °C for 2 hours. The resulting white solid substance was washed with two 50 ml portions of n-hexane and three 50 ml portions of toluene.

Contacting with silicon tetrachloride, di-n-butyl phthalate, and titanium tetrachloride

Contacting with silicon tetrachloride, di-n-butyl phthalate, and titanium tetrachloride was performed in the same manner as in Example 3. Thus there was obtained a catalyst component containing 1.9 % of titanium.

Example 10

In a 300 ml flask equipped with a dropping funnel and stirrer, with the atmosphere therein replaced with nitrogen, were placed 5 g of $SiO_2$ (the one used in Example 1) and 13.4 ml of methanol solution containing 2 mol/liter $Mg(OC_2H_5)_2$, followed by stirring at the reflux temperature for 5 hours. Then methanol was distilled away at 60 °C under reduced pressure.

The resulting solid substance was contacted with silicon tetrachloride, di-n-butyl phthalate, and titanium tetrachloride in the same manner as in Example 3. Thus there was obtained a catalyst component containing 1.2 % of titanium.

Examples 11 to 13

Magnesium di-1-methylhexyloxide solution (Example 11), magnesium di-1-methylheptyloxide solution (Example 12), and magnesium di-1-dimethylpentyl oxide solution (Example 13) were prepared in the same manner as in Example 1, except that 2-ethylhexanol used for the preparation of magnesium dialkoxide in Example 9 was replaced by 64 mmol each of 2-heptanol (Example 11), 2-octanol (Example 12), and 1,1-dimethyl-1-pentanol (Example 13). Using the magnesium dialkoxide solution thus obtained in place of solution A, contacting with silicon tetrachloride, di-n-butyl phthalate, and titanium tetrachloride was performed in the same manner as in Example 13. Thus there were obtained catalyst components each containing titanium as shown below.

| Example | Alcohol | Titanium content (%) |
|---|---|---|
| 11 | 2-Heptanol | 1.9 |
| 12 | 2-Octanol | 1.9 |
| 13 | 1,1-Dimethyl-1-pentanol | 1.9 |

Examples 14 to 20

Example 3 was repeated except that ethanol was replaced by the alcohol or alkoxyl group-containing compound shown below. Thus there were obtained catalyst components each containing titanium as shown below.

| Example | Alcohol or alkoxyl group-containing compound | Titanium content (%) |
|---|---|---|
| 14 | i-Propanol | 2.1 |
| 15 | n-Butanol | 1.9 |
| 16 | 2-Ethylhexanol | 1.6 |
| 17 | Tetraethoxysilane | 1.8 |
| 18 | Ethyl orthoformate | 1.3 |
| 19 | Triethyl borate | 2.9 |
| 20 | Triethyl phosphite | 2.8 |

Examples 21 to 26

Example 3 was repeated except that silicon tetrachloride was replaced by a halogen-containing compound shown below. Thus there were obtained catalyst components each containing titanium as shown below.

| Example | Halogen-containing compound | Titanium content (%) |
|---|---|---|
| 21 | Hexachloroethane | 2.9 |
| 22 | Carbon tetrachloride | 2.5 |
| 23 | $ICl_3$ | 1.7 |
| 24 | $AlCl_3$ | 2.1 |
| 25 | $BCl_3$ | 2.6 |
| 26 | $SnCl_4$ | 1.2 |

Examples 27 to 33

Example 3 was repeated except that di-n-butyl phthalate was replaced by an electron donor compound shown below. Thus there were obtained catalyst components each containing titanium as shown below.

| Example | Electron donor compound | Titanium content (%) |
|---|---|---|
| 27 | Ethyl benzoate | 1.4 |
| 28 | Benzoic anhydride | 1.9 |
| 29 | Benzoyl chloride | 2.7 |
| 30 | Diethyl phthalate | 1.6 |
| 31 | Phthalic acid dichloride | 2.9 |
| 32 | Phthalic anhydride | 1.8 |
| 33 | di-n-butyl maleate | 2.0 |

Examples 34 to 36

Example 3 was repeated except that contacting with di-n-butyl phthalate and titanium tetrachloride was performed in the following manner. After the first reaction with titanium tetrachloride, the supernatant liquid was removed and 50 ml of toluene and 3 g of silicon tetrachloride were added (in Example 34), 50 ml of toluene and 3 g of aluminum trichloride were added (in Example 35), or 50 ml of toluene and 3 g of hexachloroethane were added (in Example 36), followed by reaction at 60 °C for 1 hour. The resulting solid substance was washed with four 50 ml portions of toluene at 60 °C, and then 20 ml of toluene and 30 ml of titanium tetrachloride were added for the second reaction with titanium tetrachloride. The resulting solid substance was washed and dried inx the same manner as in Example 1. There were obtained catalyst components each containing 1.6 % of titanium (Example 34), 1.5 % of titanium (Example 35), and 1.5 % of titanium (Example 36).

Example 37

Solid component I was reacted with titanium tetrachloride and di-n-butyl phthalate in the same manner as in Example 3 to give a solid substance. This solid substance was washed 8 times with n-hexane and then dispersed in n-hexane to make a slurry (composed of 4.5 g of solid substance and 6.8 g of n-hexane) in the same manner as in Example 1. To the slurry was added 1.1 g of hexachloroethane and 100 ml of n-hexane, followed by contacting at 50 °C for 30 minutes. The resulting solid substance was filtered out at 50 °C, followed by washing with 100 ml portions of n-hexane at room temperature and drying under reduced pressure for 1 hour. Thus there was obtained a catalyst component containing 1.0 % of titanium.

Examples 38 to 41

Example 3 was repeated except that $SiO_2$ was replaced by the metal oxide shown below. Thus there were obtained catalyst compnents each containing titanium as shown below.

| Example | Metal oxide | Conditions of calcination | Titanium content (%) |
|---|---|---|---|
| 38 | $Al_2O_3$ | 200°C/2 hours<br>700°C/5 hours | 2.5 |
| 39 | $(MgO)_2(SiO_2)_3$ | 200°C/2 hours<br>500°C/5 hours | 2.1 |
| 40 | A mixture of 1 kg of $SiO_2$ and 100 g of $Al_2O_3$ | 200°C/2 hours<br>700°C/5 hours | 1.6 |
| 41 | A mixture of 1 kg of $SiO_2$ and 20 g of $CrO_3$ | 200°C/2 hours<br>700°C/5 hours | 1.9 |

Example 42 and 44

Example 3 was repeated except that BEM was replaced by the dihydrocarbyl magnesium shown below. Thus there were obtained catalyst components each containing titanium as shown below.

(See Table page 14)

| Example | Dihydrocarbyl magnesium | Titanium content (%) |
|---|---|---|
| 42 | Di-n-hexylmagnesium (MAGALA DNHM, made by Texas Alkyls) | 1.8 |
| 43 | Di-n-butylmagnesium (0.5 mol)-triethyl aluminum (1 mol) complex, (MAGALA 0.5E, made by Texas Alkyls) | 1.8 |
| 44 | Di-n-butylmagnesium (7.5 mol)-triethyl aluminum (1 mol) complex, (MAGALA 7.5E, made by Texas Alkyls) | 1.6 |

Example 45

Solid component I was prepared in the same manner as in Example 1, except that ethanol was used in an amount of 0.5 gram-mol per gram-atom of magnesium. This solid component I was contracted with silicon tetrachloride, di-n-butyl phthalate, and titanium tetrachloride. Thus there was obtained a catalyst component containing 1.4 % of titanium.

Example 46

Ten grams of $SiO_2$ (the one used in Example 1) and 3 g of commercial $(g(OC_2H_5)_2$ were pulverized in a mill pot for 24 hours. The resulting pulverized solid substance was contacted with silicon tetrachloride, di-n-butyl phthalate, and titanium tetrachloride in the same manner as in Example 3. Thus there was obtained a catalyst component containing 3.1 % of titanium.

Comparative Example 1

A catalyst component containing 2.7 % of titanium was prepared in the same manner as in Example 27, except that contacting with silicon tetrachloride was not performed.

Application Example 1

Into a 1.5-liter stainless steel autoclave equipped with a stirrer was charged under a nitrogen atmosphere a mixture prepared by mixing the following constituents, followed by standing for 5 minutes : (a) 33.5 mg of the catalyst component obtained in Example 1 ; (b) 0.66 ml of solution containing 1 mol of triethyl aluminum (abbreviated as TEAL hereinafter) in 1 liter of n-heptane ; and (c) 0.66 ml of solution containing 0.1 ml od phenyltriethoxysilane (abbreviated as PES hereinafter) in 1 liter of n-heptane. Then 0.3 liters of hydrogen gas as a molecular weight modifier and 1 liter of liquefied propylene were forced into the autoclave. The reaction system was heated to 70 °C and the polymerization of propylene was carried out for 1 hour. After the polymerization was complete, unreacted propylene powder was purged. There was obtained 101 g of white polypropylene powder having an HI of 96.1 %, an MFR of 6.2, and a bulk density of 0.42 g/cm$^3$. [Kc (amount of polymer (g) produced per gram of the catalyst component) = 3,000, and Kt (amount of polymer (kg) produced per gram of titanium in the catalyst component) = 159].

Application Examples 2 to 47

Polymerization of propylene was carried out in the same manner as in Application Example 1, except that the catalyst components obtained in Examples 2 to 46 and Comparative Example 1 were used. The results are shown in Table 1.

The polypropylene powder obtained in Application Example 3 was examined for particle size distribution. The results are shown below.

| Particle diameter (μm) | Distribution (%) |
|---|---|
| below 149 | 0 |
| 149 to 250 | 0.3 |
| 250 to 350 | 2.9 |
| 350 to 420 | 6.1 |
| 420 to 590 | 23.6 |
| 590 to 840 | 42.5 |
| 840 to 1 000 | 13.6 |
| 1 000 to 1 680 | 10.9 |
| above 1 680 | 0.1 |

Application Example 48

Polymerization of propylene was performed in the same manner as in Application Example 1 except that the PES solution was replaced by an n-heptane solution of ethyl p-anisate (EPA) (0.33 gram-mol per 1 gram-atom of aluminum in TEAL) and the amount of hydrogen gas was changed to 750 ml. There was obtained a polymer having a Kc of 1,800 g/g-cat, a Kt of 110 kg/g-Ti, and HI of 95.0 %, and MFR of 7.0 g/10 min, and a bulk density of 0.40 g/cm$^3$.

Application Example 49

Gas-phase polymerization of propylene

In a 5-liter autoclave equipped with a stirrer was placed 150 g of polypropylene powder which had previously been dried at 90 °C for 4 hours in a nitrogen stream. To this autoclave were fed, while running the stirrer at 150 rpm, a catalyst component prepared in Example 3 (50 mg/hour), TEAL (0.7 mmol/hour), PES (0.05 mmol/hour), propylene (130 g/hour), and hydrogen gas (15 ml/hour). Propylene was polymerized continuously under a polymerization temperature of 70 °C and a polymerization pressure of 20 kg/cm$^2$, and the polymerization product was discharged continuously. There was obtained polypropylene powder at a rate of 85 g/hour. The polymer had an MFR of 5.4 g/10 min and an HI of 96.9 %.

Application Example 50

Block Copolymerization of propylene

Into a 1.5-liter autoclave equipped with a stirrer was charged under a nitrogen atmosphere a mixture prepared by mixing the following constituents, followed by standing for 5 minutes : (a) 30.0 mg of the catalyst component obtained in Example 3 ; (b) 0.50 ml of TEAL solution (1 mol/liter) in n-heptane ; and (c) 0.50 ml of PES solution (0.1 mol/liter) in n-heptane. Then 300 ml of hydrogen gas and 1 liter of liquefied propylene were forced into the autoclave. The reaction system was heated to 70 °C and the homopolymerization of propylene was carried out for 1 hour. (According to the polymerization experiment carried out separately under the same condition, the resulting polypropylene had an HI of 97.5 %). After the polymerization was complete, unreacted propylene was purged and the atmosphere in the autoclave was replaced with nitrogen gas. Then an ethylene-propylene mixture gas [ethylene/propylene = 1.5 (molar ratio)] was introduced continuously while keeping the monomer gas pressure at 1.5 atm. Copolymerization was carried out at 70 °C for 3 hours. After the polymerization was complete, unreacted mixture gas was purged. Thus there was obtained 169 g of propylene block copolymer.

The ratio of the copolymer portion was calculated at 25.2 % on the basis of the consumption of mixture gas and the total amount of polymer produced. The content of ethylene in the total amount of the polymer was 12.6 % according to infrared spectrophotometry. This translates into an ethylene content of 50 % in the copolymer portion. The amounts of propylene homopolymer and copolymer portion formed per g of catalyst component were 3,900 g and 1,310 g, respectively, which were calculated from the total amount of polymer produced and the consumption of mixture gas. The block copolymer had an MFR of 2.5 g/10 min and a bulk density of 0.42 g/cm$_3$. There was no agglomeration of polymer particles and fouling did not take place at all in the autoclave.

Application Example 51

Random copolymerization of propylene and ethylene

When the polymerization of propylene was carried out as in Application Example 1, 0,6 g each of ethylene was introduced into the autoclave six times at intervals of 10 minutes, whereby random copolymerization of propylene and ethylene was carried out. After the completion of polymerization, unreacted monomers were purged from the polymerization system, and there was obtained 140 g of

propylene-ethylene random copolymer. The copolymer was found to contain 2.7 % of ethylene according to infrared spectrophotometry. The amount of the copolymer formed per g of catalyst component were 4.200 g. The block copolymer had an MFR of 13.6 g/10 min and a bulk density of 0.42 g/cm$^3$.

Application Example 52

Polymerization of 1-butene

Polymerization of 1-butene was performed in the same manner as in Application Example 1 except that 103 mg of catalyst component obtained in Example 3 was used, 400 ml of isobutane was used as a medium, liquefied propylene was replaced by 400 ml of 1-butene (liquid), the polymerization temperature was 40 °C, and the polymerization time was 5 hours. There was obtained 143 g of powder poly-1-butene. Kc was 1,400 g/g-catalyst component. The polymer had an MFR of 4.5 g/10 min and a bulk density of 0.40 g/cm$^3$. The amount of ether insolubles (residues remaining after extraction with boiling diethyl ether for 5 hours) was 99.1 %.

Application Example 53

Polymerization of 4-methyl-1-pentene

Polymerisation of 4-methyl-1-pentene was performed in the same manner as in Application Example 1 except that 115 mg of catalyst component obtained in Example 3 was used, propylene was replaced by 400 ml of 4-methyl-1-pentene, and the polymerization time was 6 hours. There was obtained 144 g of powder poly-4-methyl-1-pentene. Kc was 1,250 g/g-catalyst component. The polymer had an MFR of 3.9 g/10 min, a bulk density of 0.39 g.cm$^3$, and an HI of 97.6 %.

Table 1

| Application Example | Catalyst component | Kc (g/g·cat) | Kt (kg/g·Ti) | HI (%) | MFR (g/10 min) | Bulk density (g/cm$^3$) |
|---|---|---|---|---|---|---|
| 2 | Example 2 | 3,600 | 190 | 97.1 | 6.0 | 0.43 |
| 3 | Example 3 | 4,100 | 260 | 97.4 | 5.8 | 0.43 |
| 4 | Example 4 | 4,000 | 250 | 97.2 | 6.0 | 0.44 |
| 5 | Example 5 | 3,900 | 260 | 97.5 | 5.1 | 0.43 |
| 6 | Example 6 | 3,200 | 190 | 97.2 | 6.0 | 0.43 |
| 7 | Example 7 | 3,300 | 220 | 96.7 | 4.9 | 0.43 |
| 8 | Example 8 | 3,900 | 240 | 97.3 | 5.6 | 0.43 |
| 9 | Example 9 | 3,200 | 170 | 97.2 | 6.0 | 0.42 |
| 10 | Example 10 | 2,600 | 220 | 95.2 | 7.8 | 0.40 |
| 11 | Example 11 | 3,500 | 180 | 97.1 | 5.9 | 0.43 |
| 12 | Example 12 | 3,400 | 180 | 97.0 | 6.2 | 0.42 |
| 13 | Example 13 | 3,200 | 200 | 96.6 | 5.5 | 0.43 |
| 14 | Example 14 | 4,000 | 190 | 97.2 | 6.4 | 0.43 |
| 15 | Example 15 | 4,200 | 220 | 97.1 | 6.8 | 0.42 |

Table 1 (Continued)

| Application Example | Catalyst component | Kc (g/g·cat) | Kt (kg/g·Ti) | HI (%) | MFR (g/10 min) | Bulk density (g/cm³) |
|---|---|---|---|---|---|---|
| 16 | Example 16 | 3,900 | 240 | 97.0 | 5.3 | 0.43 |
| 17 | Example 17 | 4,500 | 250 | 97.5 | 6.0 | 0.43 |
| 18 | Example 18 | 2,000 | 150 | 96.8 | 4.8 | 0.41 |
| 19 | Example 19 | 3,000 | 100 | 96.8 | 6.1 | 0.42 |
| 20 | Example 20 | 2,800 | 100 | 96.6 | 5.9 | 0.42 |
| 21 | Example 21 | 3,300 | 110 | 96.8 | 5.8 | 0.42 |
| 22 | Example 22 | 3,400 | 140 | 97.0 | 6.9 | 0.41 |
| 23 | Example 23 | 2,900 | 170 | 96.6 | 6.6 | 0.42 |
| 24 | Example 24 | 2,600 | 120 | 96.8 | 6.4 | 0.40 |
| 25 | Example 25 | 2,600 | 100 | 96.7 | 5.3 | 0.40 |
| 26 | Example 26 | 2,800 | 230 | 96.9 | 7.2 | 0.43 |
| 27 | Example 27 | 2,400 | 170 | 95.2 | 7.8 | 0.42 |
| 28 | Example 28 | 2,200 | 120 | 96.8 | 6.8 | 0.42 |
| 29 | Example 29 | 2,600 | 100 | 96.2 | 7.2 | 0.43 |
| 30 | Example 30 | 3,700 | 230 | 96.4 | 6.1 | 0.42 |
| 31 | Example 31 | 2,400 | 80 | 96.0 | 7.1 | 0.42 |
| 32 | Example 32 | 2,100 | 120 | 96.1 | 8.3 | 0.42 |
| 33 | Example 33 | 2,100 | 100 | 96.2 | 9.0 | 0.41 |
| 34 | Example 34 | 4,000 | 250 | 97.2 | 6.0 | 0.43 |
| 35 | Example 35 | 3,800 | 250 | 97.3 | 5.9 | 0.44 |
| 36 | Example 36 | 3,700 | 250 | 97.0 | 5.7 | 0.43 |
| 37 | Example 37 | 2,200 | 220 | 97.4 | 6.1 | 0.43 |
| 38 | Example 38 | 1,800 | 70 | 95.8 | 6.1 | 0.40 |
| 39 | Example 39 | 2,000 | 100 | 96.1 | 5.8 | 0.41 |
| 40 | Example 40 | 1,700 | 110 | 95.4 | 5.2 | 0.39 |
| 41 | Example 41 | 2,400 | 130 | 96.5 | 5.9 | 0.40 |
| 42 | Example 42 | 4,300 | 240 | 97.0 | 7.9 | 0.42 |

Table 1 (Continued)

| Application Example | Catalyst component | Kc (g/g·cat) | Kt (kg/g·Ti) | HI (%) | MFR (g/10 min) | Bulk density (g/cm³) |
|---|---|---|---|---|---|---|
| 43 | Example 43 | 3,800 | 210 | 97.1 | 6.0 | 0.42 |
| 44 | Example 44 | 3,200 | 180 | 96.6 | 5.5 | 0.42 |
| 45 | Example 45 | 2,900 | 210 | 97.0 | 4.9 | 0.43 |
| 46 | Example 46 | 2,700 | 90 | 96.6 | 5.6 | 0.36 |
| 47 | Comparative Example 1 | 1,200 | 44 | 92.3 | 3.6 | 0.38 |

## Claims

1. A supported titanium-containing catalyst component obtainable by contacting with one another

(A) a metal oxide selected from groups II to IV of the Periodic Table

(B) a magnesium dihydrocarbyloxide represented by the formula $Mg(OR^1)_p(OR^2)_q$, wherein $R^1$ and $R^2$ are the same or different alkyl, alkenyl, cycloalkyl, aryl, or aralkyl groups having from 1 to 20 carbon atoms, p or q are greater than 0 and $p + q = 2$

(C) a halogen element of a halide, other than magnesium halide, of metallic elements or of non-metallic elements excluding silicon halide compounds having a hydrogen-silicon bond

(D) an electron donor compound ; and

(E) a di, tri or tetravalent titanium compound ; contacting step (C) occurring prior to contacting step (E).

2. The supported titanium-containing catalyst component of claim 1 wherein the (A) metal oxide is selected from the group of elements in Groups II to IV of the Periodic Table, the (C) halogen element or halogen-containing compound is selected from $Cl_2$, $Br_2$, $I_2$, $BCl_3$, $BBr_3$, $BI_3$, $ICl_3$, $AlCl_3$, $AlBr_3$, $AlI_3$, $GaCl_3$, $GaBr_3$, $InCl_3$, $TlCl_3$, $SiCl_4$, $GeCl_4$, $SnCl_4$, $SbCl_5$, $SbF_5$, $PCl_3$, $PCl_5$, hydrogen halides, oxyhalides of non-metallic elements and halogenated hydrocarbons, and the (D) electron donor compound is selected from carboxylic acids, carboxylic acid anhydrides, carboxylic acid ester, carboxylic acid halides, alcohols, and ethers, and the (E) titanium compound is $TiCl_4$.

3. The supported titanium-containing catalyst component of claim 1 wherein the (A) metal oxide is contacted with the magnesium hydrocarbyloxide at a temperature in the range of —20 °C to 150 °C for 0.1 to 100 hours to obtain contact product (a) ; contact product (a) is contacted with the halogen element of halogen-containing compound at a temperature in the range of 0 to 200 °C for 0.5 to 100 hours to yield contact product (b) ; contact product (b) is contacted with (D) electron donor compound and (E) titanium compound in any order or simultaneously.

4. The supported titanium-containing catalyst component of claim 1 wherein the (A) metal oxide, (B) magnesium dihydrocarbyloxide, and (D) electron donor are contacted in any order or simultaneously to yield contact product (c) ; contact product (c) is thereafter contacted with (C) a halogen element or halogen-containing compound to yield contact product (d) ; and contact product (d) is thereafter contacted with the titanium compound.

5. A catalyst system comprising (I) a supported titanium containing catalyst component obtainable by contacting with one another

(A) a metal oxide selected from group II to IV of the Periodic Table

(B) a magnesium dihydrocarbyloxide represented by the formula $Mg(OR^1)_p(OR^2)_q$, wherein $R^1$ and $R^2$ are the same or different alkyl, alkenyl, cycloalkyl, aryl, or aralkyl groups having from 1 to 20 carbon atoms, p or q are greater than 0 and $p + q = 2$

(C) a halogen element or a halide, other than magnesium halide, of metallic elements or of non-metallic elements excluding silicon halide compounds having a hydrogen-silicon bond

(D) an electon donor compound ; and

(E) a di, tri or tetravalent titanium compound ; contacting step (C) occurring prior to contacting step (E), and (II) an organic compound of a metal of Groups I to III of the Periodic Table.

6. The catalyst system in accordance with claim 5 further comprising (III) an electron donor compound.

7. A process for the polymerization or copolymerization of olefins which comprises contacting one or more olefins with a catalyst system comprising (I) a supported titanium-containing catalyst component obtainable by contacting with one another

(A) a metal oxide selected from group II to IV

(B) a magnesium dihydrocarbyloxide represented by the formula $Mg(OR^1)_p(OR^2)q$, wherein $R^1$ and $R^2$ are the same or different alkyl, alkenyl, cycloalkyl, aryl, or aralkyl groups having from 1 to 20 carbon atoms, p or q are greater than 0 and $p + q = 2$

(C) a halogen element or a halide, other than magnesium halide, of metallic elements or of non-metallic elements excluding silicon halide compounds having a hydrogen-silicon bond

(D) an electron donor compound ; and

(E) a di, tri or tetravalent titanium compound ; contacting with (C) occurring prior to contracting with (E), and (II) an organic compound of a metal of Groups I to III of the Periodic Table

8. The process in accordance with claim 7 wherein an alpha-monoolefin having from 2 to 10 carbon atoms is homopolymerized.

9. The process in accordance with claim 7 wherein in alpha-monoolefin having from 2 to 10 carbon atoms is (co)polymerized with another alpha-monoolefin or diolefin having from 3 to 10 carbon atoms.

10. The process in accordance with claim 7 wherein the alpha-monoolefin is propylene.

**Patentansprüche**

1. Geträgerte titanhaltige Katalysatorkomponente, erhätlich durch miteinander Inkontaktbringen von :

(A) einem Metalloxid, ausgewählt aus den Gruppen II bis IV des Periodischen Systems,

(B) einem Magnesiumdihydrocarbyloxid entsprechend der Formel $Mg(OR^1)_p(OR^2)_q$, in der $R^1$ und $R^2$ gleiche oder verschiedene Alkyl-, Alkenyl-, Cycloalkyl-, Aryl- oder Aralkylgruppen mit 1 bis 20 Kohlenstoffatomen bedeuten, p oder q größer als 0 sind und $p + q = 2$,

(C) einem Halogenelement oder einem Halogenid, das verschieden von einem Magnesiumhalogenid ist, von metallischen Elementen oder nicht-metallischen Elementen, wobei Siliziumhalogenidverbindungen mit einer Wasserstoff-Siliziumbindung ausgenommen sind,

(D) einer Elektronendonorverbindung, und

(E) eine di-, tri- oder tetravalente Titanverbindung, wobei der Kontaktschritt (C) vor dem Kontraktschritt (E) erfolgt.

2. Geträgerte titanhaltige Katalysatorkomponente nach Anspruch 1, in der das (A) Metalloxid aus der Gruppe der Elemente der Gruppen II bis IV des Periodischen Systems ausgewählt ist, das (C) Halogenelement oder die halogenhaltige Verbindung aus $Cl_2$, $Br_2$, $I_2$, $BCl_3$, $BBr_3$, $BI_3$, $ICl_3$, $AlCl_3$, $AlBr_3$, $AlI_3$, $GaBr_3$, $GaCl_3$, $InCl_3$, $TlCl_3$, $SiCl_4$, $GeCl_4$, $SnCl_4$, $SbCl_5$, $SbF_5$, $PCl_3$, $PCl_5$, Wasserstoffhalogeniden, Oxyhalogeniden von nicht-metallischen Elementen und halogenierten Kohlenwasserstoffen, und die (D) Elektronendonorverbindung aus Carbonsäuren, Carbonsäureanhydriden, Carbonsäureester, Carbonsäurehalogeniden, Alkoholen und Ethern ausgewählt ist, und die (E) Titanverbindung $TiCl_4$ ist.

3. Geträgerte titanhaltige Katalysatorkomponente nach Anspruch 1, in der das (A) Metalloxid mit dem Magnesiumhydrocarbyloxid bei einer Temperatur im Bereich von — 20 °C bis 150 °C für 0,1 bis 100 Stunden in Kontakt gebracht wird, um das Kontaktprodukt (a) zu erhalten ; das Kontakprodukt (a) mit dem Halogenelement oder der halogenhaltigen Verbindung bei einer Temperatur im Bereich von 0 bis 200 °C für 0,5 bis 100 Stunden in Kontakt gebracht wird, um das Kontaktprodukt (b) zu ergeben ; das Kontaktprodukt (b) mit (D) der Elektronendonorverbindung und (E) der Titanverbindung in jeder gewünschten Reihenfolge oder gleichzeitig in Kontakt gebracht wird.

4. Geträgerte titanhaltige Katalysatorkomponente nach Anspruch 1, in der das (A) Metalloxid, (B) Magnesiumdihydrocarbyloxid und (D) der Elektronendonor in jeder Reihenfolge oder gleichzeitig miteinander in Kontakt gebracht werden, um das Kontaktprodukt (c) zu ergeben ; das Kontaktprodukt (c) anschließend mit (C) einem Halogenelement oder einer halogenhaltigen Verbindung in Kontakt gebracht wird, um das Kontaktprodukt (d) zu ergeben, und das Kontaktprodukt (d) anschließend mit der Titanverbindung in Kontakt gebracht wird.

5. Katalysatorsystem, enthaltend (I) eine geträgerte titanhaltige Katalysatorkomponente, erhältlich durch miteinander Inkontaktbringen von :

(A) einem Metalloxid, ausgewählt aus der Gruppe II bis IV des Periodischen Systems,

(B) einem Magnesiumdihydrocarbyloxid entsprechend der Formel $Mg(OR^1)_p(OR^2)_q$, in der $R^1$ und $R^2$ die gleichen oder verschiedene Alkyl-, Alkenyl-, Cycloalkyl-, Aryl- oder Aralkylgruppen mit 1 bis 20 Kohlenstoffatomen bedeuten, p oder q größer als 0 sind, und $p + q = 2$ ist,

(C) einem Halogenelement oder Halogenid, das verschieden von einem Magnesiumhalogenid ist, von metallischen Elementen oder nicht-metallischen Elementen, wobei Siliziumhalogenidverbindungen mit einer Wasserstoff-Siliziumbindung ausgenommen sind,

(D) eine Elektronendonorverbindung, und

(E) eine dri-, tri- oder tetravalente Titanverbindung, wobei der Kontakschritt (C) vor dem

Kontaktschritt (E) erfolgt, und (II) eine organische Verbindung eines Metalls der Gruppen I bis III des Periodischen Systems.

6. Katalysatorsystem nach Anspruch 5, das zusätzlich (III) eine Elektronendonorverbindung enthält.

7. Verfahren zur Polymerisation oder Copolymerisation von Olefinen, bei dem man eines oder mehrere Olefine mit einem Katalysatorsystem in Kontakt bringt, das (I) eine geträgerte titanhaltige Katalysatorkomponente, die erhältlich ist durch miteinander Inkontaktbringen von:

(A) einem Metalloxid, ausgewählt aus der Gruppe II bis IV

(B) einem Magnesiumdihydrocarbyloxid entsprechend der Formel $Mg(OR^1)_p(OR^2)_q$, in der $R^1$ und $R^2$ die gleichen oder unterschiedliche Alkyl-, Alkenyl-, Cycloalkyl-, Aryl- oder Aralkylgruppen mit 1 bis 20 Kohlenstofatomen bedeuten, p oder a größer als 0 sind und $p + q = 2$ ist;

(C) einem Halogenelement oder Halogenid, das verschieden von einem Magnesiumhalogenid ist, von metallischen Elementen oder von nicht-metallischen Elementen, wobei Siliziumhalogenidverbindungen mit einer Wasserstoff-Siliziumbindung ausgenommen sind,

(D) einer Elektronendonorverbindung, und

(E) einer di-, tri- oder tetravalenten Titanverbindung, wobei das Inkontaktbringen mit (C) vor dem Inkontaktbringen mit (E) erfolgt, und (II) eine organische Verbindung eines Metalls der Gruppen I bis III des Periodischen Systems enthält.

8. Verfahren nach Anspruch 7, bei dem ein alpha-Monoolefin mit 2 bis 10 Kohlenstoffatomen homopolymerisiert wird.

9. Verfahren nach Anspruch 7, bei dem ein alpha-Monoolefin mit 2 bis 10 Kohlenstoffatomen mit einem anderen alpha-Monoolefin oder -Diolefin mit 3 bis 10 Kohlenstoffatomen (co)-polymerisiert wird.

10. Verfahren nach Anspruch 7, bei dem das alpha-Monoolefin Propylen ist.

## Revendications

1. Constituant de catalyseur contenant du titane, fixé sur un support, pouvant ête obtenu par mise en contact les uns avec les autres

(A) d'un oxyde d'un métal choisi dans les Groupes II à IV du Tableau Périodique,

(B) d'un dihydrocarbyloxyde de magnésium représenté par la formule $Mg(OR^1)_p(OR^2)_q$, dans laquelle $R^1$ et $R^2$ représentent des groupes, identiques ou différents, alkyle, alcényle, cycloalkyle, aryle ou aralkyle ayant 1 à 20 atomes de carbone, p ou q a une valeur supérieure à 0 et la somme $p + q$ est égale à 2,

(C) d'un halogène ou d'un halogénure, autre qu'un halogénure de magnésium, d'éléments métalliques ou d'éléments non métalliques, à l'exclusion d'halogénures de silicium comprenant une liaison hydrogène-silicium,

(D) d'un composé donneur d'électrons ; et

(E) d'un composé de titane di-, tri- ou tétravalent ; l'étape de mise en contact (C) se produisant avant l'étape de mise en contact (E).

2. Constituant de catalyseur contenant du titane, fixé sur un support, suivant la revendication 1, dans lequel le métal de l'oxyde métallique (A) est choisi entre les éléments des Groupes II à IV du Tableau Périodique, l'halogène ou le composé halogéné (C) est choisi entre $Cl_2$, $Br_2$, $I_2$, $BCl_3$, $BBr_3$, $BI_3$, $ICl_3$, $AlCl_3$, $AlBr_3$, $AlI_3$, $GaBr_3$, $GaCl_3$, $InCl_3$, $TiCl_3$, $SiCl_4$, $GeCl_4$, $SnCl_4$, $SbCl_5$, $SbF_5$, $PCl_3$, $PCl_5$, des acides halogénhydriques, des oxyhalogénures d'éléments non métalliques et des hydrocarbures halogénés, et le composé donneur d'électrons (D) est choisi entre des acides carboxyliques, des anhydrides d'acides carboxyliques, des esters d'acides carboxyliques, des halogénures d'acides carboxyliques, des alcools et des éthers, et le composé de titane (E) est $TiCl_4$.

3. Constituant de catalyseur contenant du titane, fixé sur un support, suivant la revendication 1, dans lequel l'oxyde métallique (A) est mis en contact avec l'hydrocarbyloxyde de magnésium à une température de —20 °C à 150 °C pendant un temps de 0,1 à 100 heures pour obtenir le produit de contact (a) ; le produit de contact (a) est mis en contact avec l'halogène ou le composé halogéné à une température de 0 à 200 °C pendant un temps de 0,5 à 100 heures, donnant le produit de contact (b) ; le produit de contact (b) est mis en contact avec le composé donneur d'électrons (D) et le composé de titane (E) dans n'importe quel ordre ou simultanément.

4. Constituant de catalyseur contenant du titane, fixé sur un support, suivant la revendication 1, dans lequel l'oxyde métallique (A), le dihydrocarbyloxyde de magnésium (B) et le donneur d'électrons (D) sont mis en contact dans n'importe quel ordre ou simultanément, donnant le produit de contact (c) ; le produit de contact (c) est ensuite mis en contact avec un halogène ou un composé halogéné (C), donnant le produit de contact (d) ; et le produit de contact (d) est ensuite mis en contact avec le composé de titane.

5. Composition de catalyseur comprenant (I) un constituant de catalyseur contenant du titane, fixé sur un support, pouvant être obtenu par mise en contact les uns avec les autres

(A) d'un oxyde de métal choisi dans les Groupes II à IV du Tableau Périodique,

(B) d'un dihydrocarbyloxyde de magnésium représenté par la formule $Mg(OR^1)_p(OR^2)_q$, dans laquelle $R^1$ et $R^2$ représentent des groupes, identiques ou différents, alkyle, alcényle, cycloalkyle, aryle ou

aralkyle ayant 1 à 20 atomes de carbone, p ou q a une valeur supérieure à 0 et la somme p + q est égale à 2,

(C) d'un halogène ou d'un halogénure, autre qu'un halogénure de magnésium, d'éléments métalliques ou d'éléments non métalliques, à l'exclusion d'halogénures de silicium comprenant une liaison hydrogène-silicium,

(D) d'un composé donneur d'électrons ; et

(E) d'un composé de titane di-, tri- ou tétravalent, l'étape de mise en contact (C) se produisant avant l'étape de mise en contact (E), et (II) un composé organique d'un métal des Groupes I à III du Tableau Périodique.

6. Composition de catalyseur suivant la revendication 5, comprenant en outre (III) un composé donneur d'électrons.

7. Procédé pour la polymérisation ou la copolymérisation d'oléfines, qui consiste à mettre en contact une ou plusieurs oléfines avec une composition de catalyseur comprenant (I) un constituant de catalyseur contenant du titane, fixé sur un support, pouvant être obtenu par mise en contact les uns avec les autres

(A) d'un oxyde de métal choisi dans les Groupes II à IV,

(B) d'un dihydrocarbyloxyde de magnésium représenté par la formule $Mg(OR^1)_p(OR^2)_q$, dans laquelle $R^1$ et $R^2$ représentent des groupes, identiques ou différents, alkyle, alcényle, cycloalkyle, aryle ou aralkyle ayant 1 à 20 atomes de carbone, p ou q a une valeur supérieure à 0 et la somme p + q est égale à 2,

(C) d'un halogène ou d'un halogénure, autre qu'un halogénure de magnésium, d'éléments métalliques ou d'éléments non métalliques, à l'exclusion d'halogénures de silicium comprenant une liaison hydrogène-silicium,

(D) d'un composé donneur d'électrons ; et

(E) d'un composé di-, tri- ou tétravalent ; l'étape de mise en contact (C) s'effectuant avant l'étape de mispe en contact (E), et (II) un composé organique d'un métal des Groupes I à III du Tableau Périodique.

8. Procédé suivant la revendication 7, dans lequel une alpha-mono-oléfine ayant 2 à 10 atomes de carbone est homopolymérisée.

9. Procédé suivant la revendication 7, dans lequel une alpha-mono-oléfine ayant 2 à 10 atomes de carbone est (co)polymérisée avec une autre alpha-mono-oléfine ou une dioléfine ayant 3 à 10 atomes de carbone.

10. Procédé suivant la revendication 7, dans lequel l'alpha-mono-oléfine est le propylène.